# EUROPÄISCHE PATENTSCHRIFT

(11) **EP 2 342 813 B1**
(45) Veröffentlichungstag und Bekanntmachung des Hinweises auf die Patenterteilung: **20.02.2013**
(21) Anmeldenummer: 09736240.4
(22) Anmeldetag: 19.10.2009
(51) Int. Cl.: H02P 9/00, G01R 23/10, G01R 23/12, H02P 9/48

(54) **VORRICHTUNG ZUM ERFASSEN EINER ÄNDERUNG EINES GENERATORAUSGANGSSIGNALS EINES FAHRZEUGGENERATORS**
DEVICE FOR DETECTING A CHANGE OF A GENERATOR OUTPUT SIGNAL OF A VEHICLE GENERATOR
DISPOSITIF POUR DÉTECTER UNE MODIFICATION D'UN SIGNAL DE SORTIE D'UNE GÉNÉRATRICE DE VÉHICULE

(30) Priorität: 27.10.2008 DE 102008043201
(43) Veröffentlichungstag der Anmeldung: 13.07.2011
(73) Patentinhaber: Robert Bosch GmbH, 70442 Stuttgart (DE)
(72) Erfinder: HERZ, Michael, 70469 Stuttgart (DE); REISZ, Egon, 72770 Reutlingen (DE); KOSS, Thomas, 72768 Reutlingen (DE); SUELZLE, Helmut, 71691 Freiberg (DE)
(86) Internationale Anmeldenummer: PCT/EP2009/063661
(87) Internationale Veröffentlichungsnummer: WO 2010/049305

(56) Entgegenhaltungen:
- EP-A1- 1 180 841
- EP-A2- 0 412 618
- EP-A2- 0 422 732
- GB-A- 1 383 621
- US-A- 4 665 490

## Beschreibung

### Technisches Gebiet

Die vorliegende Erfindung betrifft das Gebiet der Fahrzeuggeneratoren, welche beispielsweise zum Versorgen eines Fahrzeugs mit elektrischer Energie eingesetzt werden.

### Stand der Technik

Zur Bereitstellung von Energie in Fahrzeugen werden oft Generatoren eingesetzt, welche mittels einer Antriebsquelle, wie beispielsweise einem Verbrennungsmotor, angetrieben werden. Derartige Generatoren sind oft drei- oder mehrphasig, ausgebildet, wobei jeder Phase ein Phasensignal, beispielsweise ein U-, ein V - oder ein W-Signal, in Form eines Generatorausgangssignals zugeordnet und ausgegeben wird. Die Mehrzahl der Generatorausgangssignale bildet ein mehrphasiges Generatorgesamtsignal, welches nach einer Gleichrichtung beispielsweise in ein Fahrzeugbordnetz eingespeist werden kann.

Aufgrund einer Kopplung zwischen der Antriebsquelle, beispielsweise einem Verbrennungsmotor, und dem Generator kann jedes der Generatorausgangssignale zur Erkennung der laufenden Antriebsquelle und somit auch einer momentanen Drehzahl des Generators eingesetzt werden. Hierzu kann beispielsweise ein Generatorregler eingesetzt werden, welcher eines oder mehrere Generatorausgangssignale zur Auswertung einer Phasenfrequenz, das heißt einer Frequenz eines Generatorausgangssignals, und/oder einer Phasenamplitude, das heißt einer Amplitude eines Generatorausgangssignals, heranzieht.

Zur Frequenzauswertung kann beispielsweise eine Änderung eines Generatorausgangssignals detektiert werden, wobei eine Anzahl der Änderungen des Generatorausgangssignals innerhalb einer vorbestimmten Zeit eine Aussage über dessen Frequenz, sog. Phasenfrequenz, ermöglicht. Die Frequenzauswertung wird üblicherweise mittels einer Auswerteschaltung, beispielsweise einer Frequenz- oder Phasenauswerteschaltung, durchgeführt. Zur Detektion einer Änderung eines Generatorausgangssignals kann beispielsweise eine feste Schwelle oder zwei feste Schwellen mit einer Hysterese eingesetzt werden, deren Differenz einen Signalamplitudenbereich festlegt. Bei Generatorausgangssignalen wechselnder Amplitude können ferner variable Schwellen vorgesehen werden, wie es beispielsweise in der Druckschrift DE 19732961 A1 beschrieben ist. Darüber hinaus kann die Frequenzauswertung auf der Basis einer Differenzbildung zwischen zwei unterschiedlichen Phasen zugeordneten Generatorausgangssignalen durchgeführt werden.

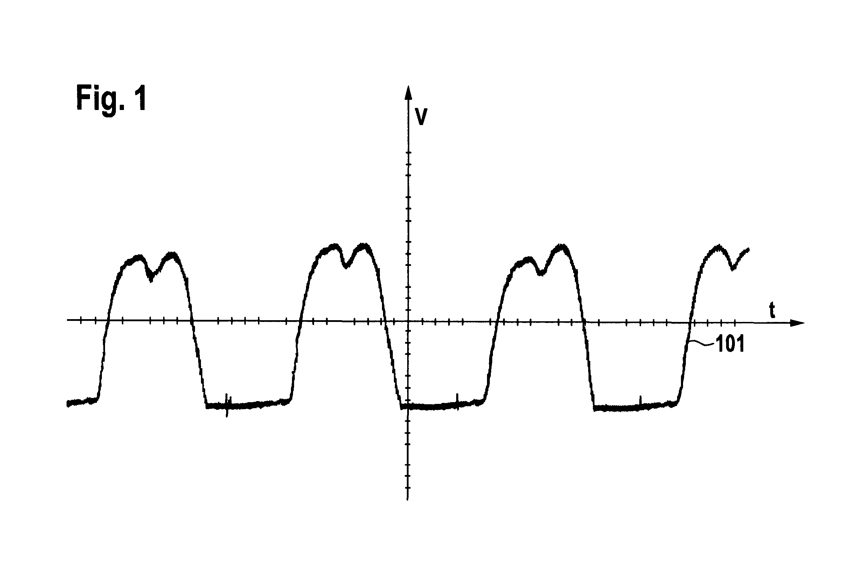

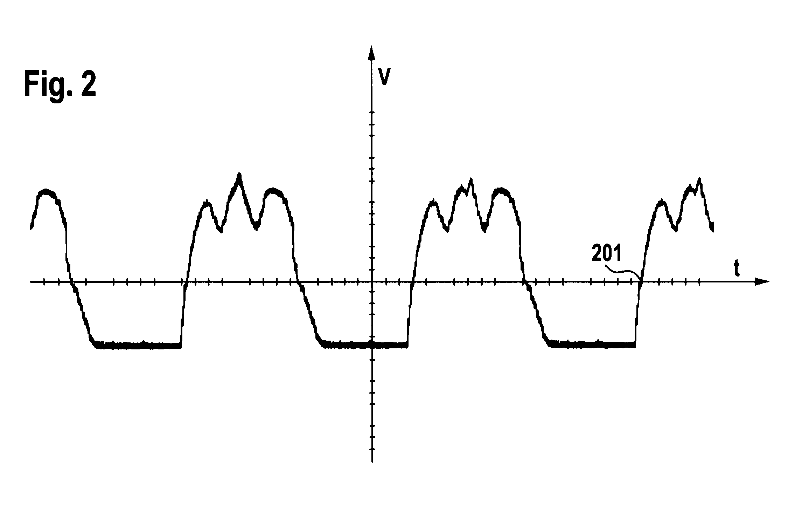

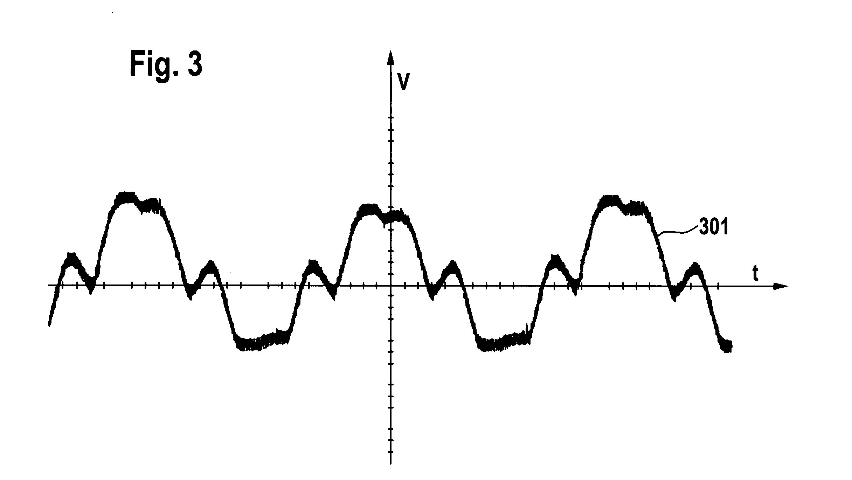

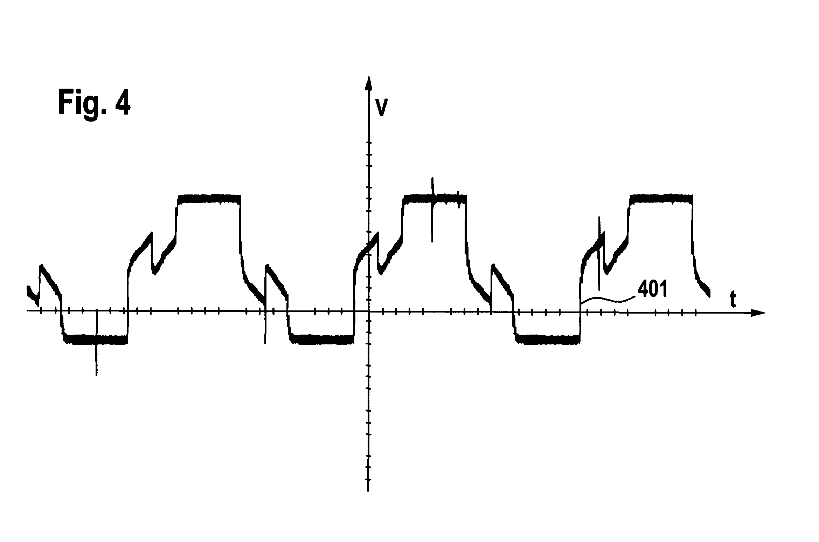

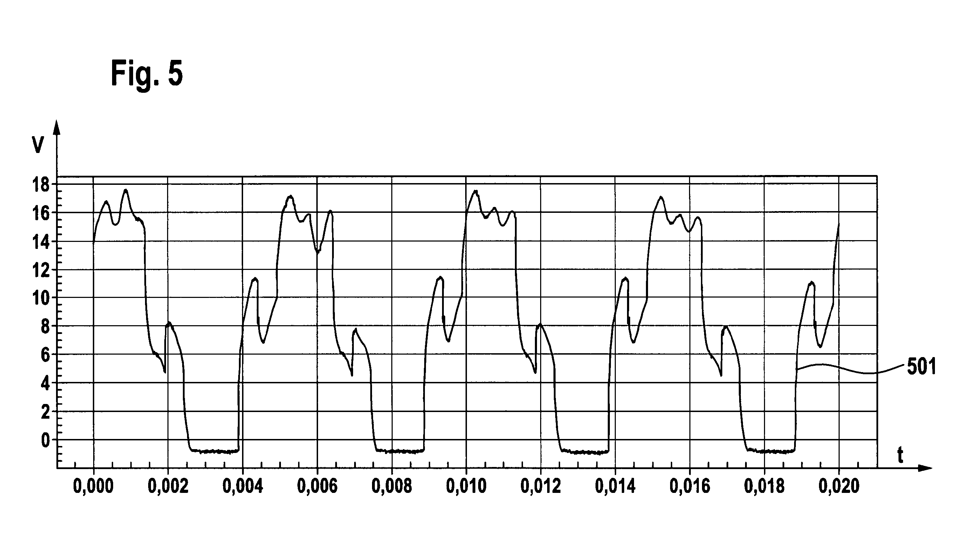

Bekannte Verfahren zur Erfassung einer Frequenz eines Generatorausgangssignals gehen von dessen sinus- bzw. rechteckförmigen Verlauf aus. In den Fig. 1 und 2 sind beispielhafte Verläufe 101 und 201 derartiger Generatorausgangssignale dargestellt. Aufgrund der Entwicklung moderner Generatoren mit drei oder mehr Phasen, aufgrund mechanischer Veränderungen oder der Verwendung von Kompensations- bzw. Permanentmagneten kann sich ein auszuwertendes Generatorausgangssignal jedoch insbesondere im Flankenbereich stark ändern, was dazu führen kann, dass eine Auswertung einer Phasenamplitude oder einer Phasenfrequenz nicht mehr in allen Frequenz- und Lastbereichen durchgeführt werden kann. In den Fig. 3, 4 und 5 sind beispielhaft einige Verläufe 301, 401 und 501 derartiger Generatorausgangssignale dargestellt. Problematisch für die bisher bekannten Auswerteverfahren sind insbesondere die nicht mehr schwingungsfreien Flankenübergänge, welche mitunter hochfrequente Anteile aufweisen können.

Darüber hinaus ist zu berücksichtigen, dass ein Drehzahlbereich eines Generators sich in einem Drehzahlband zwischen 0 und 20.000 UPM befinden kann. Daraus ergibt sich eine Phasenfrequenz von 0 bis 2.000 Hz für einen 6 Klauenpolpaargenerator bzw. 0 bis 2.700 Hz für einen 8 Klauenpolpaargenerator, sodass die Frequenzauswertung oft in einem breiten Frequenzband durchgeführt werden muss. Den Generatorausgangssignalen sind ferner Störsignale überlagert, deren Störfrequenzen bei niedrigen Drehzahlen und daher niedrigen Phasenfrequenzen bei einer Nutzsignalfrequenz eines Generatorausgangssignals bei hohen Drehzahlen bzw. Phasenfrequenzen des Generators liegen können.

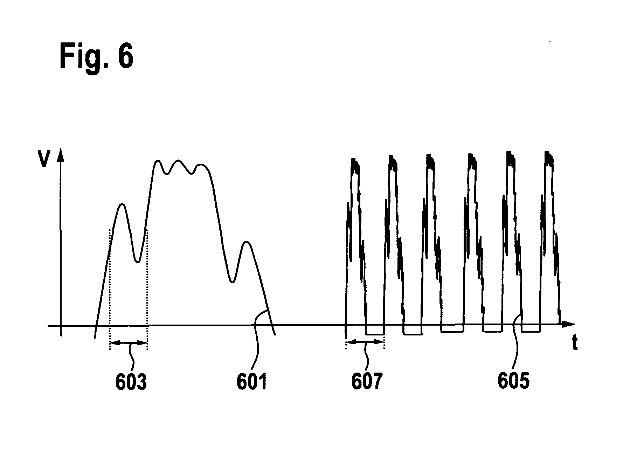

Fig. 6 zeigt exemplarisch einen Verlauf 601 eines Generatorausgangssignals mit einer Spannungsamplitude U_{Phase} bei niedrigen Drehzahlen, dem innerhalb eines Zeitintervalls 603 ein Störsignal der Zeitdauer t_{Stör} überlagert ist. Zum Vergleich ist ein Verlauf 605 eines Generatorausgangssignals bei höheren Frequenzen dargestellt, dessen Periodendauer 607, die einer Nutzzeitdauer t_{Nutz} entspricht, der Störperiodendauer 603 entsprechen kann.

Die Störsignale verfälschen darüber hinaus auch die Amplituden der Generatorausgangssignale. Sind die Amplituden der Generatorausgangssignale gering mit einer Spitze-Spitze-Spannung von weniger als 1 V_{SS}, so wirken sich Störpegel, deren Störamplitude größer als ein V_{SS} ist, negativ auf Auswertegenauigkeit schwellenbasierter Frequenzauswertekonzepte.

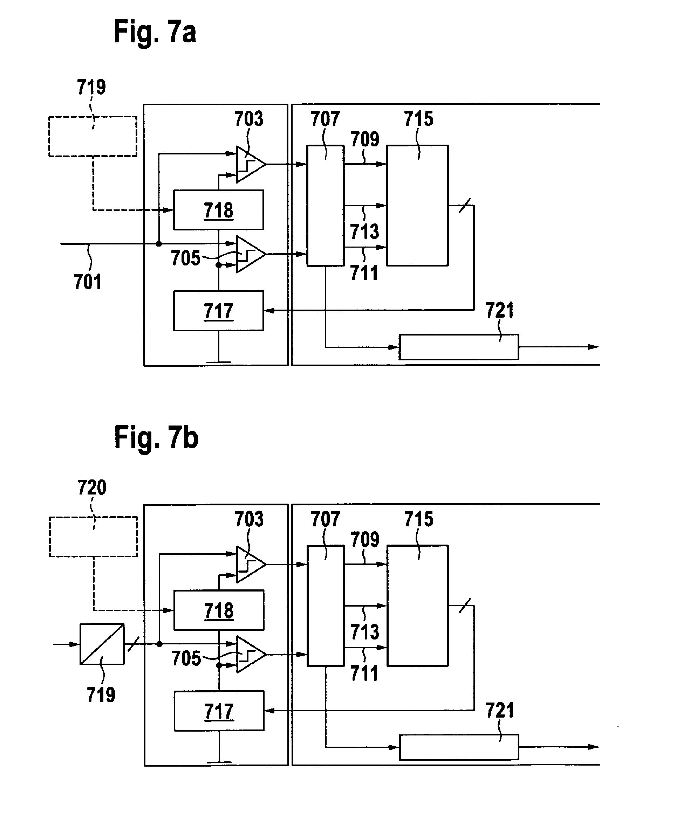

Zur Auswertung der Frequenz eines Generatorausgangssignals kann beispielsweise eine in Fig. 7a dargestellte Anordnung herangezogen werden. Ein Generatorausgangssignal, beispielsweise eine U-, die V- oder die W-Phasenkomponente eines Generatorgesamtausgangssignals, wird über einen Eingangsanschluss 701 einem ersten Komparator 703 und einem zweiten Komparator 705 zugeleitet. Die Ausgänge der Komparatoren 703 und 705 sind mit einem Erfassungselement 707 verbunden, welches ein Über- bzw. ein Unterschreiten der durch die Komparatoren 703 und 705 vorgegebenen Schwellen detektiert. Ein erster Ausgang 709 des Erfassungselementes 707 zeigt ein Überschreiten einer oberen Schwelle, ein zweiter Ausgang 711 zeigt ein Unterschreiten einer unteren Schwelle durch das Generatorausgangssignal an. Ein dritter Ausgang 713 zeigt an, dass das Generatorausgangssignal innerhalb des durch die Komparatoren 703 und 705 vorgegebenen Fensterbereichs liegt. Dem Erfassungselement 707 ist ein Aufwärts- bzw. Abwärtszähler 715 nachgeschaltet, dessen Ausgang mit einem Gleichspannungsoffsetelement 717 verbunden ist. Ein Ausgang des Gleichspannungsoffsetelementes 717 ist mit einem zweiten Eingang des Komparators 705 sowie mit einem Element 718 verbunden, dessen weiterer Ausgang mit einem weiteren Eingang des Komparators 703 verbunden ist. Mittels des Elementes 718 können im Vorfeld die obere und die untere Schwelle für die Komparatoren 703 und 705 eingestellt werden. Ferner ist ein Element 719 vorgesehen, der dem Element 718 einen Reglerstatus eines Generatorreglers übermittelt. Ein Ausgang des Erfassungselementes 707 ist ferner mit einem Frequenzerfassungselement 721 verbunden, über dessen Ausgang die Phasenfrequenz ausgebbar ist. Eine Änderung des Generatorausgangssignals, aus der beispielsweise die Phasenfrequenz ableitbar ist, kann daher auf der Basis eines Fensterkomparators mit einem diesem nachgeschalteten Detektor und Zähler realisiert werden.

Fig. 7b zeigt ein Blockdiagramm einer Vorrichtung zum Erfassen einer Änderung eines Ausgangssignals, welche vollständig digital ausgeführt ist. Hierzu umfasst die Vorrichtung im Unterschied zu der Vorrichtung aus Fig. 7a einen vorgeschalteten Analog-zu-Digital-Wandler 719. Ferner ist ein Element 720 vorgesehen, der dem Element 718 einen Reglerstatus eines Generatorreglers übermittelt.

Aus der EP 0 422 732 ist eine Vorrichtung zum Erfassen einer Änderung eines periodischen Signals eines Fahrzeuggerätes bekannt, mit einem Fensterkomparator zum Vergleichen einer Signalamplitude des Signals mit zumindest einem Schwellwert, welcher einen Signalamplitudenbereich begrenzt, mit einem Detektor zum Detektieren einer Änderung des Signals auf der Basis eines Ausgangssignals des Fensterkomparators und einer Erfassungseinrichtung zum Erfassen einer Signalamplitudendifferenz zwischen einer maximalen Signalamplitude und einer minimalen Signalamplitude des Signals und einer Adaptionseinrichtung zum Adaptieren des Signalamplitudenbereichs des Fensterkomparators auf der Basis der Signalamplitudendifferenz bei Vorliegen der Änderung des zu erfassenden Signals.

Aus der EP 1180 841 beschreibt einen Spannungsregler für einen Generator, der Generatorausgangsspannungen mittels eines Fensterkomparators auswertet Da die im wesentlichen periodischen Ausgangsspannungen je nach Drehzahl des Generators unterschiedliche Spannungsamplituden aufweisen, wird vorgeschlagen, variable Schwellwerte für die Komparatoren vorzusehen und die Höhe der Schwellwerte abhängig von Spannungen, die mittels Peak-Detektoren ermittelt werden, zu machen.

### Offenbarung der Erfindung

Die Erfindung basiert auf der Erkenntnis, dass ein effizientes Konzept zum Erfassen einer Änderung eines Generatorausgangssignals, beispielsweise eines Phasensignals eines mehrphasigen Generatorgesamtsignals, für eine Vielzahl von Generatorrealisierungsvarianten durch eine adaptive Auslegung des jeweils durch eine obere und eine untere Schwelle eines Fensterkomparators definierten Signalfensterbereichs erfolgen kann. Dabei kann ein einziges Generatorausgangssignal, beispielsweise das U-, das V- oder das W-Signal, eines mehrphasigen Generatorgesamtsignals verarbeitet werden.

Die Erfindung betrifft gemäß einem Aspekt eine Vorrichtung zum Erfassen einer Änderung eines Generatorausgangssignals eines Fahrzeuggenerators mit einem Fensterkomparator zum Vergleichen einer Signalamplitude des Generatorausgangssignals mit zumindest einem Schwellwert, welcher einen Signalamplitudenbereich begrenzt, und einen Detektor zum Detektieren einer Änderung des Generatorausgangssignals auf der Basis eines Ausgangssignals des Fensterkomparators. Die Vorrichtung umfasst ferner eine Erfassungseinrichtung zum Erfassen einer Signalamplitudendifferenz zwischen einer maximalen Signalamplitude und einer minimalen Signalamplitude des Generatorausgangssignals, wodurch ein Amplitudenhub des Generatorausgangssignals in der Gestalt einer Spitze-Spitze-Spannung und/oder eines Spitze-Spitze-Stroms erfasst wird. Die Vorrichtung umfasst ferner eine Adaptionseinrichtung zum Adaptieren des Signalamplitudenbereichs des Fensterkomparators auf der Basis der Signalamplitudendifferenz bei Vorliegen der Änderung des Generatorausgangssignals. Durch die Adaption des Signalamplitudenbereichs, durch welchen ein Signalamplitudenfenster des Fensterkomparators festgelegt wird, kann der Wirkungsbereich des Fensterkomparators adaptiv an jede Generatorausgangssignalart angepasst werden.

Gemäß einer Ausführungsform umfasst der Fensterkomparator einen ersten Komparator zum Vergleichen der Signalamplitude mit einem oberen Schwellwert des Signalamplitudenbereichs und einen zweiten Komparator zum Vergleichen der Signalamplitude mit einem unteren Schwellwert des Signalamplitudenbereichs. Die Signalamplituden können beispielsweise Strom - oder Spannungsamplituden sein, wobei die Realisierung des Fensterkomparators unter Verwendung der zwei separaten Komparatoren eine effiziente und vorteilhafte Implementierungsmöglichkeit darstellt.

Gemäß einem weiteren Ausführungsbeispiel ist die Erfassungseinrichtung ausgebildet, die Signalamplitudendifferenz innerhalb eines vorbestimmten oder vorgebbaren Zeitintervalls zu erfassen. In vorteilhafter Weise kann dadurch ein Erfassungszeitabschnitt beispielsweise einer zu erwartenden Periode des Generatorausgangssignals angepasst werden.

Gemäß einer Ausführungsform umfasst die Erfassungseinrichtung eine Prozessoreinrichtung zum Bestimmen eines Steuerungsparameters in Abhängigkeit von der Signalamplitudendifferenz gemäß einer Berechnungsvorschrift. Die Prozessoreinrichtung kann vorteilhaft vorgesehen sein, den Steuerungsparameter durch eine Halbierung oder durch eine Drittelung der Signalamplitudendifferenz oder auf der Basis einer Lookup-Tabelle, in welcher unterschiedliche Steuerungsparameter unterschiedlichen Signalamplitudendifferenzen zugeordnet sind, zu bestimmen und den Steuerungsparameter der Adaptionseinrichtung zuzuleiten, welche ansprechend hierauf den Signalamplitudenbereich vergrößert oder verringert. Dadurch wird eine einfache Regel bereitgestellt, anhand welcher der Signalbereich des Fensterkomparators in Abhängigkeit von einem Hub des Generatorausgangssignals in vorteilhafter Weise adaptiert werden kann. Die Prozessoreinrichtung kann in Software oder in Hardware unter Verwendung eines Prozessors mit beispielsweise einem Mikrocontroller oder als eine diskrete Digitalschaltung aufgebaut sein.

Gemäß einer Ausführungsform ist die Erfassungseinrichtung ausgebildet, die Signalamplitudendifferenz auf der Basis des Generatorausgangssignals selbst oder auf der Basis eines Ausgangssignals des Detektors zu bestimmen, wodurch eine vorteilhafte Schaltungsflexibilität erzielt wird.

Gemäß einer Ausführungsform umfasst der Detektor ein Erfassungselement zum Erfassen einer Änderung der Signalamplitudendifferenz und einen dem Erfassungselement nachgeschalteten Zähler zum Erhöhen oder Verringern eines Zählwertes in Abhängigkeit von der Änderung der Signalamplitudendifferenz. Somit kann das erfindungsgemäße Konzept vorteilhaft auch in bestehenden Systemen eingesetzt werden.

Gemäß einer Ausführungsform ist der Detektor dem Fensterkomparator nachgeschaltet, so dass eine direkte Signalauswertung möglich ist.

Gemäß einer Ausführungsform ist ein Gleichspannungsoffsetelement zum Übermitteln eines Gleichspannungsoffsets an die Adaptionseinrichtung vorgesehen, welche den Signalamplitudenbereich in Abhängigkeit von dem Gleichspannungsoffset beaufschlagt, wodurch dieser in einfacher Weise entlang einer Signalamplitudenachse verschoben werden kann.

Gemäß einer Ausführungsform ist ein Frequenzerfassungselement zum Erfassen einer Frequenz des Generatorausgangssignals auf der Basis einer Änderung der Signalamplitudenfrequenz vorgesehen. Das Frequenzerfassungselement ist bevorzugt der Erfassungseinrichtung des Detektors nachgeschaltet und vorgesehen, auf der Basis einer erfassten Änderung bezüglich eines oder mehrerer Schwellwerte beispielsweise innerhalb eines vorbestimmten Zeitintervalls die Frequenz des Generatorausgangssignals zu bestimmen. Dadurch können in besonders vorteilhafter Weise sowohl eine Drehzahl einer den Generator antreibenden Antriebsquelle als auch ein Antriebsstart erfasst bzw. detektiert werden.

Gemäß einer Ausführungsform umfasst die Vorrichtung eine vorgeschaltete Filtereinrichtung zum Filtern des Generatorausgangssignals, um ein gefiltertes Generatorausgangssignal zu erhalten. Bevorzugt weist die Filtereinrichtung eine vorbestimmte Filtercharakteristik mit einer Grenzfrequenz auf, welche variabel sein kann. Die Vorrichtung umfasst ferner eine Erfassungseinrichtung zum Erfassen einer Frequenz des gefilterten Generatorausgangssignals, um so die Frequenz des Generatorausgangssignals zu erhalten. Ferner ist eine Adaptionseinrichtung zum Adaptieren der Grenzfrequenz der Filtereinrichtung in Abhängigkeit von der erfassten Frequenz vorgesehen. Dadurch wird der Durchlassbereich der Filtereinrichtung beispielsweise vergrößert oder verringert, so dass stets eine Nutzfrequenzanpassung durchgeführt werden kann.

Gemäß einer Ausführungsform handelt es sich bei der Filtercharakteristik der Filtereinrichtung um eine Tiefpasscharakteristik oder um eine Bandpasscharakteristik oder um eine Hochpasscharakteristik, wobei die Grenzfrequenz eine untere oder eine obere Grenzfrequenz sein kann. Die Filtereinrichtung kann vorteilhaft in der Gestalt eines Eingangsfilters mit einer einstellbaren Eckfrequenz bzw. Grenzfrequenz digital oder analog ausgebildet sein.

Gemäß einer Ausführungsform weist die Filtereinrichtung eine Filtercharakteristik erster, zweiter oder höchstens dritter Filterordnung auf. Dadurch wird in vorteilhafter Weise sichergestellt, dass auch Nutzfrequenzanteile außerhalb der Grenzfrequenzfilter aufgrund der mit dieser Filterordnungen zusammenhängenden, geringeren Dämpfung erfasst werden können.

Gemäß einer Ausführungsform weist die Filtereinrichtung eine Filtercharakteristik auf, die mit einer Dämpfung in einem vorbestimmten Frequenzbereich außerhalb der Grenzfrequenz zusammenhängt, welche bevorzugt einen vorbestimmten Dämpfungswert nicht überschreitet. Der Dämpfungsanstieg kann beispielsweise 6 dB pro Oktave, 12 dB pro Oktave oder 18 dB pro Oktave betragen. Dadurch kann in vorteilhafter Weise bei einer Auswertung einer Energie oder einer Leistung des Generatorausgangssignals in einem Frequenzband außerhalb der Grenzfrequenz der bekannte Dämpfungsverlauf berücksichtigt werden.

Gemäß einer Ausführungsform ist die Adaptionseinrichtung bevorzugt ausgebildet, die Grenzfrequenz zu erhöhen, falls die erfasste Grenzfrequenz außerhalb der Grenzfrequenz liegt und ein Signalwert bei der erfassten Frequenz einen vorbestimmten Schwellwert überschreitet. Bei dem Signalwert kann es sich beispielsweise um eine Signalamplitude oder um eine Signalleistung oder um eine Signalenergie des Generatorausgangssignals handeln. Der vorbestimmte Schwellwert kann beispielsweise in Prozent ausgedrückt sein und 1 %, 2 % oder 10 % eines Signalwertes bei der Grenzfrequenz betragen. Dadurch wird eine genauere Erfassung des Nutzfrequenzbereichs ermöglicht.

Gemäß einer Ausführungsform ist die Adaptionseinrichtung ausgebildet, die Grenzfrequenz zu verringern, falls die erfasste Grenzfrequenz geringer als die Grenzfrequenz ist und ein Generatorsignalwert bei der erfassten Frequenz einen vorbestimmten Schwellwert unterschreitet. Dieser Schwellwert kann ebenfalls in Prozent ausgedrückt sein und beispielsweise geringer als 1 % eines Signalwertes bei der Grenzfrequenz betragen. Dadurch wird in vorteilhafter Weise eine optimale Anpassung des Durchlassbandes an dem Nutzfrequenzband bei gleichzeitiger Verringerung der Störungen erreicht.

Gemäß einem weiteren Aspekt betrifft die Erfindung ein Verfahren zum Erfassen einer Änderung eines Generatorausgangssignals eines Fahrzeuggenerators mit Vergleichen einer Signalamplitude des Generatorausgangssignals mit zumindest einem Schwellwert, welcher einen Signalamplitudenbereich begrenzt, Detektieren einer Änderung des Generatorausgangssignals auf der Basis eines

Ausgangssignals des Fensterkomparators, Erfassen einer Signalamplitudendifferenz zwischen einer maximalen Signalamplitude und einer minimalen Signalamplitude des Generatorausgangssignals und Adaptieren des Signalamplitudenbereichs des Fensterkomparators auf der Basis der Signalamplitudendifferenz bei Vorliegen der Änderung des Generatorausgangssignals. Weitere Verfahrensschritte ergeben sich direkt aus der Funktionalität der erfindungsgemäßen Vorrichtung zum Erfassen einer Änderung eines Generatorausgangssignals.

### Zeichnungen

Weitere Ausführungsbeispiele werden Bezug nehmend auf die beiliegenden Zeichnungen näher erläutert. Es zeigen:
Fig. 1 ein Generatorausgangssignal;
Fig. 2 ein Generatorausgangssignal;
Fig. 3 ein Generatorausgangssignal;
Fig. 4 ein Generatorausgangssignal;
Fig. 5 ein Generatorausgangssignal;
Fig. 6 ein Generatorausgangssignal;
Fig. 7a, 7b Blockdiagramme einer Vorrichtung zum Erfassen einer Änderung eines Generatorausgangssignals;
Fig. 8 ein Blockdiagramm einer Vorrichtung zum Erfassen einer Änderung eines Generatorausgangssignals;
Fig. 9 ein Blockdiagramm einer Vorrichtung zum Erfassen einer Änderung eines Generatorausgangssignals; und
Fig. 10a - 10c zeitliche Signalverläufe.

### Beschreibung der Ausführungsformen

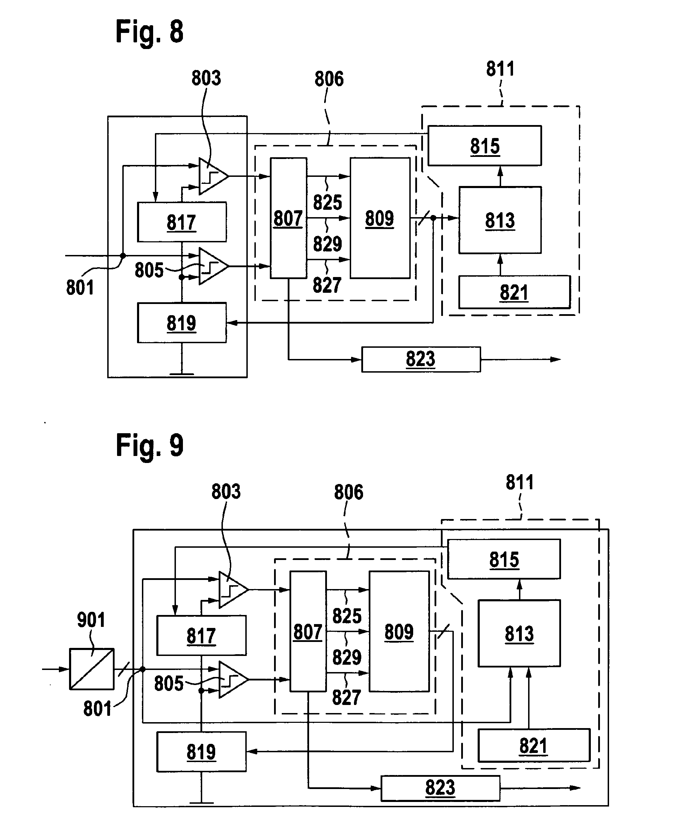

Fig. 8 zeigt ein Blockdiagramm einer Vorrichtung zum Erfassen einer Änderung eines Generatorausgangssignals, beispielsweise einer Phasenänderung oder einer Frequenzänderung. Die Vorrichtung umfasst einen Eingangsanschluss 801, an welchen ein Generatorausgangssignal, beispielsweise ein U- oder ein V- oder ein W-Signal, anlegbar ist. Dem Eingangsanschluss 801 ist ein Fensterkomparator nachgeschaltet, welcher beispielsweise einen ersten Komparator 803 und einen zweiten Komparator 805 aufweist. Dem Fensterkomparator ist ein Detektor 806 nachgeschaltet, welcher beispielsweise ein Erfassungselement 807 und einen dem Erfassungselement 807 nachgeschalteten Zähler 809 aufweist, dessen Ausgang einen Ausgang des Detektors 806 formt. Dem Detektor 806 ist ferner eine Erfassungseinrichtung 811 nachgeschaltet.

Die Erfassungseinrichtung 811 umfasst bevorzugt eine Bestimmungseinrichtung 813 zum Bestimmen einer Signalamplitudendifferenz und eine der Bestimmungseinrichtung 813 nachgeschaltete Prozessoreinrichtung 815, welche einen Steuerungsparameter in Abhängigkeit der ihr zugeleiteten Signalamplitudendifferenz bestimmt. Ein Ausgang der Prozessoreinrichtung 815 ist mit einem Eingang einer Adaptionseinrichtung 817 verbunden. Die Adaptionseinrichtung 817 ist mit dem Fensterkomparator gekoppelt und umfasst hierzu beispielsweise Ausgänge, welche jeweils mit dem ersten Komparator 803 und dem zweiten Komparator 805 verbunden sind.

Der Ausgang des Detektors 806 ist ferner mit einem Gleichspannungsoffsetelement 819 verbunden, welches beispielsweise zwischen Masse und der Adaptionseinrichtung 817 angeordnet ist. Ein Ausgang des Gleichspannungsoffsetelementes 819 ist ferner mit dem Fensterkomparator, beispielsweise mit einem Eingang des zweiten Komparators 805, verbunden.

Die Vorrichtung umfasst optional ein Zeitgeber 821, welcher mit der Bestimmungseinrichtung 813 gekoppelt ist und zum Vorgeben eines Zeitfensters, in welchem die Signalamplitudendifferenz bestimmt werden soll, vorgesehen ist. Die Vorrichtung umfasst ferner eine Frequenzauswerteeinrichtung 823, welche dem Erfassungselement 807 nachgeschaltet ist.

Die in Fig. 8 dargestellte Vorrichtung kann sowohl digitale als auch analoge Elemente aufweisen. So sind beispielsweise der Fensterkomparator sowie die Adaptionseinrichtung 817 und das Gleichspannungsoffsetelement 819 beispielsweise analog ausgeführt. Die übrigen Schaltungselemente sind bevorzugt digital.

Im Betrieb wird der in Fig. 8 dargestellten Vorrichtung über beispielsweise einen Phasenanschluss eines Generators ein Generatorausgangssignal mit einer Signalamplitude, beispielsweise mit einer Spannungsamplitude Uᵥ, zugeleitet und über den Eingangsanschluss 801 dem ersten Komparator 803 und dem zweiten Komparator 805 des Fensterkomparators zugeführt. Der erste Komparator 803 ist beispielsweise vorgesehen, das Generatorausgangssignal mit einem oberen Schwellwert zu vergleichen, während der zweite Komparator 805 das Generatorausgangssignal mit einem unteren Schwellwert vergleicht. Eine Differenz zwischen dem oberen Schwellwert und dem unteren Schwellwert ergibt einen Schwellwertbereich, welcher einem Komparatorfenster entspricht. Dabei erzeugt der erste Komparator 803 beispielsweise ein Ausgangssignal, falls die Signalamplitude des Generatorausgangssignals den oberen Schwellwert überschreitet. In Analogie hierzu erzeugt der zweite Komparator 805 ein Ausgangssignal, falls die Signalamplitude des Generatorausgangssignals den unteren Schwellwert unterschreitet. Das dem Fensterkomparator nachgeschaltete Erfassungselement 807 erfasst eine Änderung des jeweiligen Ausgangs des jeweiligen Komparators 803 und 805 und erzeugt auf dieser Basis ein Ausgangssignal, welches den nachgeschalteten Zähler 809 zum Aufwärtszählen, zum Abwärtszählen oder zum verbleiben im gegenwärtigen Zustand veranlasst. Hierzu kann das Erfassungselement 807 einen einzigen Ausgang aufweisen, welcher dem Zähler zugeführt ist. Alternativ kann das Erfassungselement 807 drei Ausgänge aufweisen, so dass über einen ersten Ausgang 825 ein Überschreiten der oberen Schwelle, über einen zweiten Ausgang 827 ein Unterschreiten der unteren Schwelle und optional über einen dritten Ausgang 829 ein Verbleiben des Generatorausgangssignals innerhalb des durch den Fensterkomparator vorgegebenen Signalamplitudenbereichs angezeigt wird. Darüber hinaus kann auch auf der Basis einer Unterschreitung oder Überschreitung der oberen oder der unteren Schwelle erkannt werden, ob das Generatorausgangssignal innerhalb des Fensterkomparatorbereichs oder darunter oder darüber liegt.

Aus der Änderung eines der Ausgangssignale des jeweiligen Komparators 803 bzw. 805 kann auf einen Phasentakt und somit auf eine Phasenfrequenz geschlossen werden. Hierzu wird die Frequenzerfassungseinrichtung 823 durch das Erfassungselement 807 ein Signal zugeleitet, welches eine Änderung des jeweiligen Komparatorausgangs anzeigt. Die Frequenzerfassungseinrichtung 823 ermittelt beispielsweise auf der Basis einer Anzahl von Änderungen der Komparatorausgangssignale innerhalb eines vorbestimmten Zeitintervalls eine gegenwärtige Frequenz des Generatorausgangssignals.

Der dem Erfassungselement 807 nachgeschaltete Zähler 809 erhöht oder verringert einen Zählwert in Abhängigkeit davon, ob die Signalamplitude den oberen Schwellwert überschritten bzw. den unteren Schwellwert unterschritten hat. Die dem Zähler 809 nachgeschaltete Bestimmungseinrichtung 813 erfasst auf der Basis des resultierenden Zählwertes eine Signalamplitudendifferenz, das heißt eine Differenz zwischen einer maximalen Signalamplitude und einer minimalen Signalamplitude innerhalb eines vorgegebenen Zeitintervalls, welches beispielsweise durch das Zeitfensterelement 821 vorgegeben werden kann. Eine Information über die Signalamplitudendifferenz, beispielsweise über eine Differenz zwischen den Spannungsspitzenwerten, wird der Prozessoreinrichtung zugeleitet, welche auf dieser Basis einen Steuerungsparameter für die Adaptionseinrichtung 817 ermittelt. Hierzu kann die Prozessoreinrichtung beispielsweise die Signalamplitudendifferenz halbieren oder dritteln, um den Steuerungsparameter zu erhalten. Der Steuerungsparameter wird der Adaptionseinrichtung 817 zugeleitet, welche auf dieser Basis den Signalamplitudenbereich des Fensterkomparators vergrößert oder verringert, wodurch ein Erfassungsfenster vergrößert oder verringert wird. Der Signalamplitudenbereich des Fensterkomparators wird also ausschließlich auf der Basis eines Hubs des Generatorausgangssignals bzw. einer von diesem Hub abhängigen Größe bestimmt.

Fig. 9 zeigt beispielhaft eine vollständig digitale Struktur einer Vorrichtung zum Erfassen einer Änderung eines Generatorausgangssignals, welche im Unterschied zu der in Fig. 8 dargestellten Struktur einen vorgeschalteten Analog-zu-Digital-Wandler 901 umfasst. Gemäß einer Ausführungsform kann die Bestimmungseinrichtung 813 nach wie vor die Signalamplitudendifferenz auf der Basis des Ausgangssignals des Zählers 809 erfassen. Gemäß einer weiteren Ausführungsform ist es aufgrund des vorgeschalteten Analog-zu-Digital-Wandlers 801 möglich, dass die Bestimmungseinrichtung 813 die Signalamplitudendifferenz, also beispielsweise eine Differenz zwischen einer maximalen und einer minimalen Amplitude des Generatorausgangssignals, direkt auf der Basis eines durch den Analog-zu-Digital-Wandler ausgegebenen digitalen Ausgangssignals, welches das Generatorausgangssignal repräsentiert, durchführen kann. In diesem Fall kann die Bestimmungseinrichtung 813 die Signalamplitudendifferenz beispielsweise aus einer Differenz zwischen einem maximalen digitalen Wert und einem minimalen digitalen Wert des Ausgangssignals des Analog-zu-Digital-Wandler bestimmen. Der durch die Prozessoreinrichtung 815 bestimmte Steuerungsparameter U_{AC} kann beispielsweise in der Gestalt einer Spannungsamplitude bestimmt werden, welche eine Fensterbreite des Fensterkomparators festlegt. Diese Spannungsamplitude ist beispielsweise nicht kleiner als 0,6 V und nicht größer als 6 V. Zum Bestimmen der Spannungsamplitude kann die Prozessoreinrichtung 815 die ermittelte Spitze-Spitze-Spannung, also eine Differenz zwischen einer minimalen und einer maximalen Spannung, durch einen Faktor teilen, welcher beispielsweise gleich 2 oder 3 sein kann. Im Allgemeinen kann der Steuerungsparameter U_{AC} beispielsweise in Form eines Spannungswertes bestimmt werden.

Alternativ kann die Prozessoreinrichtung 815 ausgebildet sein, die Steuerungsparameter beispielsweise in Form des Spannungswertes in Abhängigkeit einer Spitze-Spitze-Spannung des Generatorausgangssignals U_{Phase,SS}, wie folgt bestimmen:

| | | | | |
|---|---|---|---|---|
| U_{Phase_SS}= | 0..<2V | 2V..<3V | 3V..<6V | 6V..<12V |
| U_{AC} = | 0,6V | 1,0V | 2,5V | 4,5V |

Erfindungsgemäß wird die Fensterkomparatorschwelle, beispielsweise eine AC (AC: Alternate Current) Fensterkomparatorschwelle, in Abhängigkeit von der gemessenen Signalamplitude des Generatorausgangssignals bestimmt. Das Generatorausgangssignal kann beispielsweise eines der Phasensignale sein, welche die jeweilige Phase eines mehrphasigen Generatorgesamtsignals repräsentieren. Dadurch passt sich die Fensterkomparatorschwelle bzw. der Fensterkomparatorbereich der Signalamplitude adaptiv ein und ermöglicht so einen für jeden Arbeitsbereich und jeden Generator optimalen Störabstand zwischen einem Nutzsignal und einer Störamplitude. Dadurch wird in vorteilhafter Weise erreicht, dass künftig keine applikationsabhängige Anpassung der Phasenauswertung notwendig ist.

Wie es in den Fig. 8 und 9 verdeutlicht ist, wird die Frequenzauswertung mittels eines nachgeführten Gleichspannungsoffsets (DC-Offsets) und einer darauf aufgeschalteten Fensterkomparatorschwelle mittels des Fensterkomparators realisiert. Der Fensterkomparator erzeugt ein Steuersignal für den Aufwärts- bzw. Abwärtszähler 809, welcher auf seinem Zählwert stehen bleibt oder den Zählwert erhöht oder reduziert. Die Fensterkomparatorschwelle, welche eine Hysterese zwischen einer oberen und einer unteren Schaltschwelle, das heißt zwischen dem oberen Schwellwert und dem unteren Schwellwert bildet, wird jedoch nicht als eine feste Schwelle mit vorgegebenen Spannungswerten realisiert, wie es beispielsweise in den Fig. 7a und 7b dargestellten Ausführungsbeispielen der Fall ist. Dabei kann durch das Element 719 je nach einem Reglerstatus für den Startvorgang oder für einen Notstart eine beispielsweise empfindliche Schwelle ausgewählt werden. Im Regelbetrieb wird dagegen eine deutlich höhere Schwelle mit einem größeren Störabstand gewählt, um Störwelligkeiten auszublenden. Erfindungsgemäß ist die Fensterkomparatorschwelle jedoch nicht vorgegeben, sondern sie hängt von einer Amplitude des Generatorausgangssignals, also von einer Phasenamplitude, ab und wird adaptiv nachgeführt. Dadurch wird stets ein optimaler Störabstand in jedem Arbeitspunkt ermöglicht.

Die Adaptionseinrichtung 817 adaptiert die Fensterkomparatorschwelle, also den durch den Fensterkomparator definierten Signalamplitudenbereich, beispielsweise mittels eines variablen einstellbaren Spannungswertes, welcher in der Form eines analogen Wertes oder digital bereitgestellt werden kann. Die Adaption kann auf der Basis eines Zeitintervalls durchgeführt werden, welches durch den Zeitgeber 821 festgelegt ist, so dass ein Zeitfenster zur Erfassung der Generatorausgangssignalamplitude vorgegeben wird. Dieser wird durch eine Auswertung der Zahlenwerte des Zählers 809 oder einem Ausgangssignal des Wandlers 901 erfasst. Zur Erfassung der Signalamplitudendifferenz gehören beispielsweise Minimal- und Maximalwerte der Amplitude des Generatorausgangssignals, beispielsweise der Spannungsamplitude, in dem vorgegebenen Zeitintervall gemessen und erfasst werden. Die Prozessoreinrichtung 815 ermittelt beispielsweise anhand einer Rechenvorschrift bzw. eines Kennfeldes, welches aus der gemessenen Amplitude einen Stellwert in der Form des Steuerungsparameters für die Höhe der Fensterkomparatorschwelle berechnet bzw. ermittelt und dem Adaptionselement 718 zuleitet.

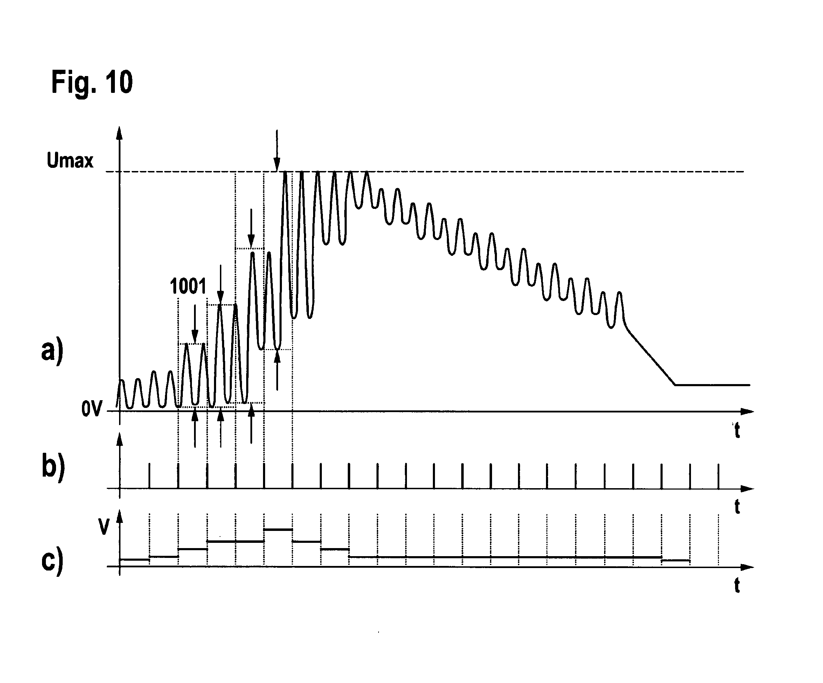

In den Fig. 10a, 10b und 10c sind die zeitlichen Verfahrensabläufe noch einmal genauer dargestellt. Fig. 10a zeigt dabei den Verlauf einer Generatorausgangssignalspannung Uᵥ, welche das Generatorausgangssignal repräsentiert. Die Signalamplitudendifferenz kann beispielsweise in der Form eines Spannungswertes 1001, welcher beispielsweise einem Wert U_{Phase_SS} entsprechen kann und durch die in Fig. 10a dargestellten Pfeile gekennzeichnet ist, repräsentiert werden. Fig. 10b verdeutlicht die maßgeblichen Zeitintervalle für die Nachführung der Fensterkomparatorschwelle. Fig. 10c verdeutlicht den entsprechenden Verlauf der Spitzen-Spitzen-Spannung in Abhängigkeit von der Zeit.

## Patentansprüche

1. Vorrichtung zum Erfassen einer Änderung eines Generatorausgangssignals eines Fahrzeuggenerators, mit:
einem Fensterkomparator (803, 805) zum Vergleichen einer Signalamplitude des Generatorausgangssignals mit zumindest einem Schwellwert, welcher einen Signalamplitudenbereich begrenzt;
einem Detektor (806) zum Detektieren einer Änderung des Generatorausgangssignals auf der Basis eines Ausgangssignals des Fensterkomparators (803, 805);
einer Erfassungseinrichtung (811) zum Erfassen einer Signalamplitudendifferenz zwischen einer maximalen Signalamplitude und einer minimalen Signalamplitude des Generatorausgangssignals; und
einer Adaptionseinrichtung (817) zum Adaptieren des Signalamplitudenbereichs des Fensterkomparators auf der Basis der Signalamplitudendifferenz bei Vorliegen der Änderung des Generatorausgangssignals,
wobei eine Prozessoreinrichtung (815) anhand einer Rechenvorschrift oder eines Kennfeldes aus der gemessenen Signalamplitude einen Stellwert in Form eines Steuerungsparameters für die Höhe der Fensterkomparatorschwelle ermittelt und Adaptionselement (817) zuleitet.

2. Vorrichtung gemäß Anspruch 1, wobei der Fensterkomparator (803, 805) einen ersten Komparator (803) zum Vergleichen der Signalamplitude mit einem oberen Schwellwert des Signalamplitudenbereichs und einen zweiten Komparator (805) zum Vergleichen der Signalamplitude mit einem unteren Schwellwert des Signalamplitudenbereichs aufweist.

3. Vorrichtung gemäß einem der vorgenannten Ansprüche, wobei die Erfassungseinrichtung (811) ausgebildet ist, die Signalamplitudendifferenz innerhalb eines vorbestimmten oder vorgebbaren Zeitintervalls zu erfassen.

4. Vorrichtung gemäß einem der vorgenannten Ansprüche, wobei die Erfassungseinrichtung (811) eine Prozessoreinrichtung (815) zum Bestimmen eines Steuerungsparameters in Abhängigkeit von der Signalamplitudendifferenz gemäß einer Berechnungsvorschrift, insbesondere durch eine Halbierung oder eine Drittelung der Signalamplitudendifferenz oder durch eine Verringerung der Signalamplitudendifferenz um einen nichtganzzahligen oder einen ganzzahligen Faktor, oder gemäß einer Look-Up-Tabelle, und wobei die Adaptionseinrichtung (817) ausgebildet ist, den Signalamplitudenbereich ansprechend auf den Steuerungsparameter zu vergrößern oder zu verringern.

5. Vorrichtung gemäß einem der vorgenannten Ansprüche, wobei die Erfassungseinrichtung (811) ausgebildet ist, die Signalamplitudendifferenz auf der Basis des Generatorausgangssignals oder auf der Basis eines Ausgangssignals des Detektors (806) zu bestimmen.

6. Vorrichtung gemäß einem der vorgenannten Ansprüche, wobei der Detektor (806) ein Erfassungselement (807) zum Erfassen einer Änderung der Signalamplitudendifferenz und einen dem Erfassungselement nachgeschalteten Zähler (809) zum Erhöhen oder Verringern eines Zählwertes in Abhängigkeit von der Änderung der Signalamplitudendifferenz aufweist.

7. Vorrichtung gemäß einem der vorgenannten Ansprüche, wobei der Detektor (806) dem Fensterkomparator (803, 805) nachgeschaltet ist.

8. Vorrichtung gemäß einem der vorgenannten Ansprüche, die ferner ein Gleichspannungsoffsetelement (819) zum Übermitteln eines Gleichspannungsoffsets an die Adaptionseinrichtung (817) aufweist, und wobei die Adaptionseinrichtung (817) ausgebildet ist, den Signalamplitudenbereich gemäß dem Gleichspannungsoffset zu beaufschlagen.

9. Vorrichtung gemäß einem der vorgenannten Ansprüche, die ferner ein Frequenzerfassungselement (823) zum Erfassen einer Frequenz des Generatorausgangssignals auf der Basis einer Änderung der Signalamplitudendifferenz aufweist.

10. Vorrichtung gemäß einem der vorgenannten Ansprüche, mit:
einer vorgeschalteten Filtereinrichtung zum Filtern des Generatorausgangssignals, um ein gefiltertes Generatorausgangssignal zu erhalten, wobei die Filtereinrichtung eine vorbestimmte Filtercharakteristik mit einer Grenzfrequenz aufweist;
einer Erfassungseinrichtung zum Erfassen einer Frequenz des gefilterten Generatorausgangssignals, um die Frequenz des Generatorausgangssignals zu erfassen; und
einer Adaptionseinrichtung zum Adaptieren der Grenzfrequenz der Filtereinrichtung in Abhängigkeit von der erfassten Frequenz.

11. Verfahren zum Erfassen einer Änderung eines Generatorausgangssignals eines Fahrzeuggenerators, mit:
Vergleichen einer Signalamplitude des Generatorausgangssignals mit zumindest einem Schwellwert, welcher einen Signalamplitudenbereich begrenzt;
Detektieren einer Änderung des Generatorausgangssignals auf der Basis des Vergleichs;
Erfassen einer Signalamplitudendifferenz zwischen einer maximalen Signalamplitude und einer minimalen Signalamplitude des Generatorausgangssignals; und
Adaptieren des Signalamplitudenbereichs auf der Basis der Signalamplitudendifferenz bei Vorliegen der Änderung des Generatorausgangssignals.
wobei von einer Prozessoreinrichtung (815) anhand einer Rechenvorschrift oder eines Kennfeldes aus der gemessenen Signalamplitude ein Stellwert in Form eines Steuerungsparameters für die Höhe der Fensterkomparatorschwelle ermittelt wird und dem Adaptionselement (817) zugeleitet wird.

## Claims

1. Device for detecting a change in a generator output signal of a vehicle generator, having:
a window comparator (803, 805) for comparing a signal amplitude of the generator output signal with at least one threshold value which bounds a signal amplitude range;
a detector (806) for detecting a change in the generator output signal on the basis of an output signal of the window comparator (803, 805);
a detection device (811) for detecting a difference in signal amplitude between a maximum signal amplitude and a minimum signal amplitude of the generator output signal; and
an adaption device (817) for adapting the signal amplitude range of the window comparator on the basis of the difference in signal amplitude when the change in the generator output signal occurs,
wherein a processor device (815) determines, on the basis of a computational rule or a characteristic diagram, a manipulated variable in the form of a control parameter for the level of the window comparator threshold from the measured signal amplitude, and feeds said manipulated variable to adaptation element (817).

2. Device according to Claim 1, wherein the window comparator (803, 805) has a first comparator (803) for comparing the signal amplitude with an upper threshold value of the signal amplitude range and a second comparator (805) for comparing the single amplitude with a lower threshold value of the signal amplitude range.

3. Device according to one of the abovementioned claims, wherein the detection device (811) is designed to sense the difference in signal amplitude within a predetermined or predefinable time interval.

4. Device according to one the abovementioned claims, wherein the detection device (811) has a processor device (815) for determining a control parameter as a function of the difference in signal amplitude according to a computational rule, in particular by dividing the signal amplitude difference in half or into three, or by reducing the difference in signal amplitude by a non-integral or an integral factor, or according to a look-up table, and wherein the adaptation device (817) is designed to increase or reduce the signal amplitude range in response to the control parameter.

5. Device according to one of the abovementioned claims, wherein the detection device (811) is designed to determine the difference in signal amplitude on the basis of the generator output signal or on the basis of an output signal of the detector (806).

6. Device according to one of the abovementioned claims, wherein the detector (806) has a detection element (807) for detecting a change in the difference in signal amplitude, and a counter (809) which is connected downstream of the detection element and has the purpose of increasing or reducing a reading as a function of the change in the difference in signal amplitude.

7. Device according to one of the abovementioned claims, wherein the detector (806) is connected downstream of the window comparator (803, 805).

8. Device according to one of the abovementioned claims, which device also has a direct voltage offset element (819) for transmitting a direct voltage offset to the adaptation device (817), and wherein the adaption device (817) is designed to apply the signal amplitude range in accordance with the direct voltage offset.

9. Device according to one of the abovementioned claims, which device also has a frequency detection element (823) for detecting a frequency of the generator output signal on the basis of a change in the difference in signal amplitude.

10. Device according to one of the abovementioned claims, comprising:
an upstream filter device for filtering the generator output signal in order to obtain a filtered generator output signal, wherein the filter device has a predetermined filter characteristic with a cutoff frequency;
a detection device for detecting a frequency of the filtered generator output signal in order to detect the frequency of the generator output signal; and
an adaptation device for adapting the cutoff frequency of the filter device as a function of the detected frequency.

11. Method for detecting a change in a generator output signal of a vehicle generator, comprising:
comparison of a signal amplitude of the generator output signal with a least one threshold value which bounds a signal amplitude range;
detection of a change in the generator output signal on the basis of the comparison;
detection of a difference in signal amplitude between a maximum signal amplitude and a minimum signal amplitude of the generator output signal; and
adaptation of the signal amplitude range on the basis of the difference in signal amplitude when the change in the generator output signal occurs,
wherein a manipulated variable in the form of a control parameter for the level of the window comparator threshold is determined from the measured signal amplitude by a processor device (815) on the basis of a computational rule or a characteristic diagram, and said manipulated variable is fed to the adaptation element (817).

## Revendications

1. Dispositif de détection d'une modification d'un signal de sortie de générateur d'un générateur de véhicule, comprenant :
un comparateur à fenêtre (803, 805) pour comparer une amplitude de signal du signal de sortie de générateur avec au moins une valeur de seuil qui limite une plage d'amplitude du signal ;
un capteur (806) pour capter une modification du signal de sortie de générateur en se basant sur un signal de sortie du comparateur à fenêtre (803, 805) ;
un dispositif de détection (811) pour détecter une différence d'amplitude de signal entre une amplitude de signal maximale et une amplitude de signal minimale du signal de sortie de générateur ; et
un dispositif d'adaptation (817) pour adapter la plage d'amplitude du signal du comparateur à fenêtre en se basant sur la différence d'amplitude de signal en présence de la modification du signal de sortie de générateur,
un dispositif à processeur (815) déterminant une valeur de commande sous la forme d'un paramètre de commande pour la hauteur du seuil du comparateur à fenêtre au moyen d'une prescription de calcul ou d'un diagramme caractéristique à partir de l'amplitude de signal mesurée et l'acheminant à l'élément d'adaptation (817).

2. Dispositif selon la revendication 1, dans lequel le comparateur à fenêtre (803, 805) présente un premier comparateur (803) pour comparer l'amplitude du signal avec une valeur de seuil supérieure de la plage d'amplitude du signal et un deuxième comparateur (805) pour comparer l'amplitude du signal avec une valeur de seuil inférieure de la plage d'amplitude du signal.

3. Dispositif selon l'une des revendications précédentes, dans lequel le dispositif de détection (811) est configuré pour détecter la différence d'amplitude de signal à l'intérieur d'un intervalle de temps prédéterminé ou pouvant être prédéfini.

4. Dispositif selon l'une des revendications précédentes, dans lequel le dispositif de détection (811) comprend un dispositif à processeur (815) pour déterminer un paramètre de commande en fonction de la différence d'amplitude de signal conformément à une prescription de calcul, notamment en divisant par deux ou par trois la différence d'amplitude de signal ou en réduisant la différence d'amplitude de signal d'un facteur non entier ou entier, ou conformément à un tableau de référence, et dans lequel le dispositif d'adaptation (817) est configuré pour augmenter ou réduire la plage d'amplitude du signal en réaction au paramètre de commande.

5. Dispositif selon l'une des revendications précédentes, dans lequel le dispositif de détection (811) est configuré pour déterminer la différence d'amplitude de signal en se basant sur le signal de sortie de générateur ou en se basant sur un signal de sortie du capteur (806).

6. Dispositif selon l'une des revendications précédentes, dans lequel le capteur (806) présente un élément de détection (807) pour détecter une modification de la différence d'amplitude de signal et un compteur (809) branché à la suite de l'élément de détection pour augmenter un réduire une valeur de comptage en fonction de la modification de la différence d'amplitude de signal.

7. Dispositif selon l'une des revendications précédentes, dans lequel le capteur (806) est branché à la suite du comparateur à fenêtre (803, 805).

8. Dispositif selon l'une des revendications précédentes, lequel présente en plus un élément de décalage de tension continue (819) pour communiquer un décalage de tension continue au dispositif d'adaptation (817), et dans lequel le dispositif d'adaptation (817) est configuré pour appliquer la plage d'amplitude du signal conformément au décalage de tension continue.

9. Dispositif selon l'une des revendications précédentes, lequel présente en plus un élément de détection de fréquence (823) pour détecter une fréquence du signal de sortie de générateur en se basant sur une modification de la différence d'amplitude de signal.

10. Dispositif selon l'une des revendications précédentes, comprenant :
un dispositif de filtrage branché en amont pour filtrer le signal de sortie de générateur afin d'obtenir un signal de sortie de générateur filtré, le dispositif de filtrage présentant une caractéristique de filtrage prédéterminée avec une fréquence limite ;
un dispositif de détection pour détecter une fréquence du signal de sortie de générateur filtré afin de détecter la fréquence du signal de sortie de générateur ; et
un dispositif d'adaptation pour adapter la fréquence limite du dispositif de filtrage en fonction de la fréquence détectée.

11. Procédé de détection d'une modification d'un signal de sortie de générateur d'un générateur de véhicule, comprenant :
la comparaison d'une amplitude de signal du signal de sortie de générateur avec au moins une valeur de seuil qui limite une plage d'amplitude du signal ;
le captage d'une modification du signal de sortie de générateur en se basant sur la comparaison ;
la détection d'une différence d'amplitude de signal entre une amplitude de signal maximale et une amplitude de signal minimale du signal de sortie de générateur ; et
l'adaptation de la plage d'amplitude du signal en se basant sur la différence d'amplitude de signal en présence de la modification du signal de sortie de générateur,
une valeur de commande sous la forme d'un paramètre de commande pour la hauteur du seuil du comparateur à fenêtre étant déterminée par un dispositif à processeur (815) au moyen d'une prescription de calcul ou d'un diagramme caractéristique à partir de l'amplitude de signal mesurée et étant acheminée à l'élément d'adaptation (817).
